# EUROPÄISCHE PATENTANMELDUNG

(11) **EP 0 889 107 A2**
(43) Veröffentlichungstag der Anmeldung: **07.01.1999**
(21) Anmeldenummer: 98810579.7
(22) Anmeldetag: 24.06.1998
(51) Int. Cl.: C09J 165/00, C08G 61/00

(54) **Klebstoff aus Basis von Cycloolefin**

(30) Priorität: 03.07.1997 CH 1619/97
(71) Anmelder: Ciba Specialty Chemicals Holding Inc., 4057 Basel (CH)
(72) Erfinder: Setiabudi, Frans, 79427 Eschbach (DE)

(57) **Zusammenfassung**

Die Erfindung betrifft die Verwendung einer Zusammensetzung enthaltend
(a) mindestens ein gespanntes Cycloolefin,
(b) einen Katalysator für die ringöffnende Metathese-Polymerisation,
(c) einen Füllstoff und
(d) ein Silan der Formel I 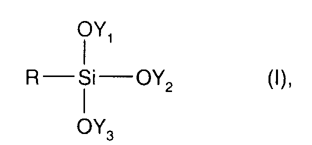
worin R für eine einwertige organische Gruppe mit 2 bis 100 C-Atomen steht, wobei ein oder mehrere -Atome durch O-, S-, N- oder Si-Atome ersetzt sein können und Y₁, Y₂ und Y₃ unabhängig voneinander C₁-C₂₀-Alkyl, C₅-C₂₀-Aryl, C₆-C₂₀-Aralkyl, C₅-C₁₂-Cycloalkyl, C₂-C₂₀-Alkoxyalkyl oder C₁-C₂₀-Acyl bedeuten, als Klebstoff.

## Beschreibung

Die vorliegende Erfindung betrifft die Verwendung einer Zusammensetzung enthaltend ein gespanntes Cycloolefin, einen Katalysator, einen Füllstoff und ein Silan als Klebstoff sowie ein Verfahren zum Verkleben von Substraten.

In der WO 96/16100 und WO 96/20235 wird erwähnt, dass die dort beschriebenen ROMP-Systeme (ROMP = ringöffnende Metathese-Polymerisation) auf Basis von gespannten Cycloolefinen und spezifischen Ruthenium-Katalysatoren als Klebstoffe zum Verkleben von Teflon, Polyethylen und Polypropylen geeignet sind. Die Haftung auf dem Substrat ist jedoch wegen der niedrigen Polarität der Cycloolefine für gewisse Anwendungen unzureichend.

Verklebungen mit Reaktivklebstoffen zeigen innere Spannungen infolge des Reaktionsschwundes, wenn die grösseren zwischenmolekularen Abstände zwischen den Monomeren durch die kürzeren Abstände der kovalenten Bindungen zwischen den Polymersegmenten ersetzt werden. Dieser Schwund lässt sich durch den Zusatz geeigneter Füllstoffe reduzieren; allerdings führt der Füllstoffzusatz im allgemeinen zu einem Kohäsionsbruch.

Es wurde nun überraschenderweise gefunden dass die in der EP-A-771 830 beschriebenen ROMP-Systeme mit Füllstoffen eine sehr gute Haftung aufweisen und daher Verwendung als Klebstoffe finden können.

Gegenstand der vorliegenden Erfindung ist die Verwendung einer Zusammensetzung enthaltend
(a) mindestens ein gespanntes Cycloolefin,
(b) einen Katalysator für die ringöffnende Metathese-Polymerisation,
(c) einen Füllstoff und
(d) ein Silan der Formel I 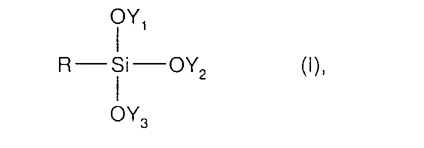
worin R für eine einwertige organische Gruppe mit 2 bis 100 C-Atomen steht, wobei ein oder mehrere -Atome durch O-, S-, N- oder Si-Atome ersetzt sein können und Y₁, Y₂ und Y₃ unabhängig voneinander C₁-C₂₀-Alkyl, C₅-C₂₀-Aryl, C₆-C₂₀-Aralkyl, C₅-C₁₂-Cycloalkyl, C₂-C₂₀-Alkoxyalkyl oder C₁-C₂₀-Acyl bedeuten, als Klebstoff.

Das ausgehärtete ROMP-System zeigt eine besonders hohe Haftung auf Metallen, wie beispielsweise Eisen oder Aluminium. Bevorzugt ist daher die Verwendung der oben angegebenen Zusammensetzung als Klebstoff für Metalle, insbesondere für Aluminium.

Unter gespannten Cycloolefinen sind im Rahmen der vorliegenden Erfindung alle Cycloolefine mit Ausnahme des Cyclohexens und seiner Derivate, die nicht mit der ringöffnenden Metathese polymerisiert werden können, zu verstehen.

Bei den gespannten Cycloolefinen kann es sich um monocyclische oder polycyclische kondensierte bzw. überbrückte Ringsysteme, zum Beispiel mit zwei bis vier Ringen, handeln, die unsubstituiert oder substituiert sind und Heteroatome, wie zum Beispiel O, S, N oder Si, in einem oder mehreren Ringen und/oder kondensierte aromatische oder heteroaromatische Ringe, wie zum Beispiel o-Phenylen, o-Naphthylen, o-Pyridinylen oder o-Pyrimidinylen, enthalten können. Die einzelnen cyclischen Ringe können 3 bis 16, bevorzugt 3 bis 12 und besonders bevorzugt 3 bis 8 Ringglieder enthalten. Die gespannten Cycloolefine können weitere nichtaromatische Doppelbindungen enthalten, je nach Ringgrösse bevorzugt 2 bis 4 solcher zusätzlicher Doppelbindungen. Die Ringsubstituenten sind inert, d.h. diese Substituenten beeinträchtigen die chemische Stabilität und die Thermostabilität der ROMP-Katalysatoren nicht.

Wenn die gespannten Cycloolefine mehr als eine Doppelbindung enthalten, zum Beispiel 2 bis 4 Doppelbindungen, können sich abhängig von den Reaktionsbedingungen, dem gewählten Monomer und der Katalysatormenge, auch vernetzte Polymerisate bilden.

Vorzugsweise wird in der erfindungsgemässen Zusammensetzung als Komponente (a) eine Verbindung der Formel II verwendet 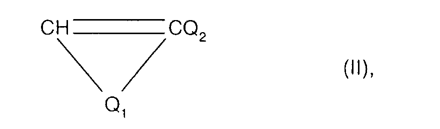 worin
Q₁ ein Rest mit mindestens einem Kohlenstoffatom ist, der zusammen mit der -CH=CQ₂-Gruppe einen mindestens 3-gliedrigen alicyclischen Ring bildet, welcher ein oder mehrere Heteroatome ausgewählt aus der Gruppe Silicium, Phosphor, Sauerstoff, Stickstoff oder Schwefel enthalten kann, und welcher unsubstituiert oder mit Halogen, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀-Alkyl, C₁-C₂₀-Hydroxyalkyl, C₁-C₂₀-Halogenalkyl, C₁-C₆-Cyanoalkyl, C₃-C₈-Cycloalkyl, C₆-C₁₆-Aryl, C₇-C₁₆-Aralkyl, C₃-C₆-Heterocycloalkyl, C₃-C₁₆-Heteroaryl, C₄-C₁₆-Heteroaralkyl oder R₄-X-substituiert ist; oder bei welchem zwei benachbarte C-Atome durch -CO-O-CO- oder -CO-NR₅-CO- verbunden sind; oder bei welchem an benachbarten Kohlenstoffatomen des alicyclischen Rings ein alicyclischer, aromatischer oder heteroaromatischer Ring ankondensiert ist, welcher unsubstituiert oder mit Halogen, -CN, -NO₂, R₆R₇R₈Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀-Alkyl, C₁-C₂₀-Halogenalkyl, C₁-C₂₀-Hydroxyalkyl, C₁-C₆-Cyanoalkyl, C₃-C₈-Cycloalkyl, C₆-C₁₆-Aryl, C₇-C₁₆-Aralkyl, C₃-C₆-Heterocycloalkyl, C₃-C₁₆-Heteroaryl, C₄-C₁₆-Heteroaralkyl oder R₁₃-X₁- substituiert ist; X und X₁ unabhängig voneinander für -O-, -S-, -CO-, -SO-, -SO₂-, -O-CO-, -COO-, -CO-NR₅-, -NR₁₀-CO-, -SO₂-O- oder -O-SO₂- stehen; R₁, R₂ und R₃ unabhängig voneinander C₁-C₁₂-Alkyl, C₁-C₁₂-Perfluoralkyl, Phenyl oder Benzyl bedeuten; R₄ und R₁₃ unabhängig voneinander C₁-C₂₀-Alkyl, C₁-C₂₀-Halogenalkyl, C₁-C₂₀-Hydroxyalkyl, C₃-C₈-Cycloalkyl, C₆-C₁₆-Aryl, C₇-C₁₆-Aralkyl bedeuten; R₅ und R₁₀ unabhängig voneinander Wasserstoff, C₁-C₁₂-Alkyl, Phenyl oder Benzyl bedeuten, wobei die Alkylgruppen ihrerseits unsubstituiert oder mit C₁-C₁₂-Alkoxy oder C₃-C₈-Cycloalkyl substituiert sind; R₆, R₇ und R₈ unabhängig voneinander C₁-C₁₂-Alkyl, C₁-C₁₂-Perfluoralkyl, Phenyl oder Benzyl bedeuten; M für ein Alkalimetall und M₁ für ein Erdalkalimetall stehen; und u für 0 oder 1 steht; wobei der mit Q₁ gebildete alicyclische Ring weitere nicht-aromatische Doppelbindungen enthalten kann;
Q₂ Wasserstoff, C₁-C₂₀-Alkyl, C₁-C₂₀-Halogenalkyl, C₁-C₁₂-Alkoxy, Halogen, -CN, R₁₁-X₂-darstellt; R₁₁ C₁-C₂₀-Alkyl, C₁-C₂₀-Halogenalkyl, C₁-C₂₀-Hydroxyalkyl, C₃-C₈-Cycloalkyl, C₆-C₁₆-Aryl oder C₇-C₁₆-Aralkyl bedeutet; X₂ -COO- oder -CO-NR₁₂- ist; R₁₂ Wasserstoff, C₁-C₁₂-Alkyl, Phenyl oder Benzyl darstellt;
wobei die vorgenannten Cycloalkyl-, Heterocycloalkyl-, Aryl-, Heteroaryl-, Aralkyl- und Heteroaralkylgruppen unsubstituiert oder mit C₁-C₁₂-Alkyl, C₁-C₁₂-Alkoxy, -NO₂, -CN oder Halogen substituiert sind, und wobei die Heteroatome der vorgenannten Heterocycloalkyl-, Heteroaryl- und Heteroaralkylgruppen aus der Gruppe -O-, -S-, -NR₉- und -N= ausgewählt sind; und R₉ Wasserstoff, C₁-C₁₂-Alkyl, Phenyl oder Benzyl darstellt.

Ankondensierte alicyclische Ringe enthalten bevorzugt 3 bis 8, besonders bevorzugt 4 bis 7 und insbesondere bevorzugt 5 oder 6 Ring-C-Atome.
Die erfindungsgemässe Zusammensetzung kann zur Vernetzung oder zur Regelung des Molekulargewichts weitere zur Metathese fähige Olefine enthalten, zweckmässig in Mengen bis zu 40 mol-%, bevorzugt 0,01 bis 30 mol-% und besonders bevorzugt 0,1 bis 20 mol-%, bezogen auf die Gesamtmenge der vorhandenen Cycloolefine und Olefine.

Geeignete zur Metathese fähige Olefine sind beispielsweise Cyclooctadien, Cyclooctatrien, Norbornadien oder Acetylnorbornen. Ferner sind auch Verbindungen wie 2-Buten-1,4-diol, wie in Feast, W.J., Harrison, B, J. Mol. Catal. **65**, 63 (1991) beschrieben, oder 1-Hexen (Umlagerungen) geeignet.

Ist in den Verbindungen der Formel II ein asymmetrisches Zentrum vorhanden, so hat dies zur Folge, daß die Verbindungen in optisch isomeren Formen auftreten können. Einige Verbindungen der Formel II können in tautomeren Formen (z.B. Keto-Enol-Tautomerie) vorkommen. Liegt eine aliphatische C=C-Doppelbindung vor, so kann auch geometrische Isomerie (E-Form oder Z-Form) auftreten. Ferner sind auch Exo-Endo-Konfigurationen möglich. Die Formel II umfaßt somit alle möglichen Stereoisomeren, die in Form von Enantiomeren, Tautomeren, Diastereomeren, E/Z-lsomeren oder Gemischen davon vorliegen.

In den Definitionen der Substituenten können die Alkyl-, Alkenyl- und Alkinylgruppen geradkettig oder verzweigt sein. Dasselbe gilt auch für den bzw. jeden Alkylteil von Alkoxy-, Alkylthio-, Alkoxycarbonyl- und von weiteren Alkyl enthaltenden Gruppen. Diese Alkylgruppen enthalten bevorzugt 1 bis 12, besonders bevorzugt 1 bis 8 und insbesondere bevorzugt 1 bis 4 C-Atome. Diese Alkenyl- und Alkinylgruppen enthalten bevorzugt 2 bis 12, besonders bevorzugt 2 bis 8 und insbesondere bevorzugt 2 bis 4 C-Atome.

Alkyl umfaßt beispielsweise Methyl, Ethyl, Isopropyl, n-Propyl, n-Butyl, Isobutyl, sek.-Butyl, tert.-Butyl sowie die verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl- , Nonadecyl- und Eicosylgruppen.

Hydroxyalkyl umfaßt beispielsweise Hydroxymethyl, Hydroxyethyl, 1-Hydroxyisopropyl, 1-Hydroxy-n-propyl, 2-Hydroxy-n-butyl, 1-Hydroxyisobutyl, 1-Hydroxy-sek.-butyl, 1-Hydroxy-tert.-butyl sowie die verschiedenen hydroxylsubstituierten isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Halogenalkyl umfaßt beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl, 2,2,2-Trichlorethyl sowie halogenierte, besonders fluorierte oder chlorierte Isopropyl-, n-Propyl-, n-Butyl-, Isobutyl-, sek.-Butyl-und tert.-Butylgruppen sowie die verschiedenen isomeren halogenierten Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Alkenyl umfaßt zum Beispiel Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, Isododecenyl, n-Octadec-2-enyl und n-Octadec-4-enyl.

Bei Cycloalkyl handelt es sich bevorzugt um C₅-C₈-Cycloalkyl, besonders um C₅- oder C₆-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Cyanoalkyl umfaßt beispielsweise Cyanomethyl (Methylnitril), Cyanoethyl (Ethylnitril), 1-Cyanoisopropyl, 1-Cyano-n-propyl, 2-Cyano-n-butyl, 1-Cyanoisobutyl, 1-Cyano-sek.-butyl, 1-Cyano-tert.-butyl sowie die verschiedenen isomeren Cyanopentyl- und -hexylreste.

Aralkyl enthält bevorzugt 7 bis 12 C-Atome und besonders bevorzugt 7 bis 10 C-Atome. Es kann sich zum Beispiel um Benzyl, Phenethyl, 3-Phenylpropyl, α-Methylbenzyl, 4-Phenylbutyl und α,α-Dimethylbenzyl handeln.

Aryl enthält bevorzugt 6 bis 10 C-Atome. Es kann sich beispielsweise um Phenyl, Pentalinyl, Indenyl, Naphtyl, Azulinyl und Anthryl handeln.

Heteroaryl enthält bevorzugt 4 oder 5 C-Atome und ein oder zwei Heteroatome aus der Gruppe O, S und N. Es kann sich beispielsweise um Pyrrolyl, Furanyl, Thiophenyl, Oxazolyl, Thiazolyl, Pyridyl, Pyrazinyl, Pyrimidinyl, Pyridazinyl, Indolyl, Purinyl und Chinolyl handeln.

Heterocycloalkyl enthält bevorzugt 4 oder 5 C-Atome und ein oder zwei Heteroatome aus der Gruppe O, S und N. Es kann sich beispielsweise um Oxiranyl, Azirinyl, 1,2-Oxathiolanyl, Pyrazolinyl, Pyrrolidinyl, Piperidyl, Piperazinyl, Morpholinyl, Tetrahydrofuranyl und Tetrahydrothiophenyl handeln.

Alkoxy ist beispielsweise Methoxy, Ethoxy, Propyloxy, Isopropyloxy, n-Butyloxy, Isobutyloxy, sek.-Butyloxy und tert.-Butyloxy.

Unter Alkalimetall ist im Rahmen der vorliegenden Erfindung Lithium, Natrium, Kalium, Rubidium und Cäsium, insbesondere Lithium, Natrium und Kalium zu verstehen.

Unter Erdalkalimetall ist im Rahmen der vorliegenden Erfindung Beryllium, Magnesium, Calcium, Strontium und Barium, insbesondere Magnesium und Calcium zu verstehen.

In den obigen Definitionen ist unter Halogen Fluor, Chlor, Brom und Jod, vorzugsweise Fluor, Chlor und Brom, zu verstehen.

In der erfindungsgemäßen Zusammensetzung besonders gut geeignete Verbindungen der Formel II sind jene, worin Q₂ Wasserstoff bedeutet.

Weiterhin bevorzugt sind Verbindungen der Formel II, worin Q₁ ein Rest mit mindestens einem Kohlenstoffatom ist, der zusammen mit der -CH=CQ₂-Gruppe einen 3- bis 10-gliedrigen alicyclischen Ring bildet, der ein Heteroatom ausgewählt aus der Gruppe Silicium, Sauerstoff, Stickstoff und Schwefel enthalten kann, und der unsubstituiert oder mit Halogen, -CN, -NO₂, R₁R₂R₃Si-, -COOM, -SO₃M, -PO₃M, -COO(M₁)_{1/2}, -SO₃(M₁)_{1/2}, -PO₃(M₁)_{1/2}, C₁-C₆-Alkyl, C₁-C₆-Halogenalkyl, C₁-C₆-Hydroxyalkyl, C₁-C₄-Cyanoalkyl, C₃-C₆-Cycloalkyl, Phenyl, Benzyl oder R₄-X- substituiert ist; oder bei dem an benachbarten Kohlenstoffatomen ein aromatischer oder heteroaromatischer oder alicyclischer Ring ankondensiert sein kann, welcher unsubstituiert oder durch Halogen, -CN, -NO₂, R₆R₇R₈Si-, -COOM, -SO₃M, -PO₃M,-COO(M₁)_{1/2}, -SO₃(M₁)_{1/2}, -PO₃(M₁)_{1/2}, C₁-C₆-Alkyl, C₁-C₆-Halogenalkyl, C₁-C₆-Hydroxyalkyl, C₁-C₄-Cyanoalkyl, C₃-C₆-Cycloalkyl, Phenyl, Benzyl oder R₁₃-X₁- substituiert ist; R₁, R₂ und R₃ unabhängig voneinander C₁-C₄-Alkyl, C₁-C₄-Perfluoralkyl, Phenyl oder Benzyl bedeuten; M für ein Alkalimetall und M₁ für ein Erdalkalimetall stehen; R₄ und R₁₃ unabhängig voneinander C₁-C₆-Alkyl, C₁-C₆-Halogenalkyl, C₁-C₆-Hydroxyalkyl oder C₃-C₆-Cycloalkyl bedeuten; X und X₁ unabhängig voneinander für -O-, -S-, -CO-, -SO- oder -SO₂- stehen und R₆, R₇ und R₈ unabhängig voneinander C₁-C₄-Alkyl, C₁-C₄-Perfluoralkyl, Phenyl oder Benzyl darstellen.

Norbornen und Norbornenderivate, insbesondere Dicyclopentadien und Dicyclopentadienderivate, sind besonders bevorzugt als Komponente (a).

Bevorzugte Norbornenderivate sind die Verbindungen der Formeln III, IV, V und VI 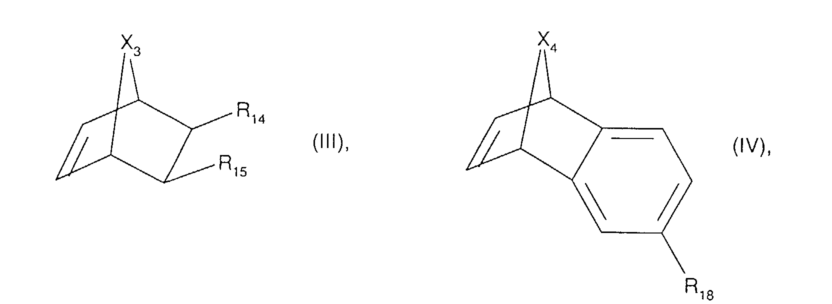 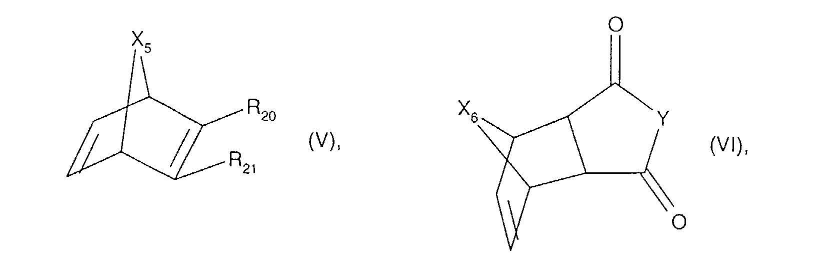 worin
X₃ -CHR₁₆-, Sauerstoff oder Schwefel ist, R₁₄ und R₁₅ unabhängig voneinander Wasserstoff, -CN, Trifluormethyl, (CH₃)₃SiO-, (CH₃)₃Si- oder -COOR17 bedeuten und R₁₆ und R₁₇ unabhängig voneinander Wasserstoff, C₁-C₁₂-Alkyl, Phenyl oder Benzyl darstellen;
X₄ -CHR₁₉-, Sauerstoff oder Schwefel ist, R₁₉ Wasserstoff, C₁-C₁₂-Alkyl, Phenyl oder Benzyl bedeutet und R₁₈ für Wasserstoff, C₁-C₆-Alkyl oder Halogen steht;
X₅ -CHR₂₂-, Sauerstoff oder Schwefel ist, R₂₂ Wasserstoff, C₁-C₁₂-Alkyl, Phenyl oder Benzyl bedeutet und R₂₀ und R₂₁ unabhängig voneinander Wasserstoff, CN, Trifluormethyl, (CH₃)₃SiO-, (CH₃)₃Si- oder -COOR₂₃ darstellen und R₂₃ für Wasserstoff, C₁-C₁₂-Alkyl, Phenyl oder Benzyl steht;
X₆ -CHR₂₄-, Sauerstoff oder Schwefel ist, R₂₄ Wasserstoff, C₁-C₁₂-Alkyl, Phenyl oder Benzyl bedeutet, Y Sauerstoff oder 〉N-R₂₅ darstellt und R₂₅ für Wasserstoff, Methyl, Ethyl oder Phenyl steht.

Beispiele für geeignete Verbindungen der Formel II sind die folgenden Cycloolefine:

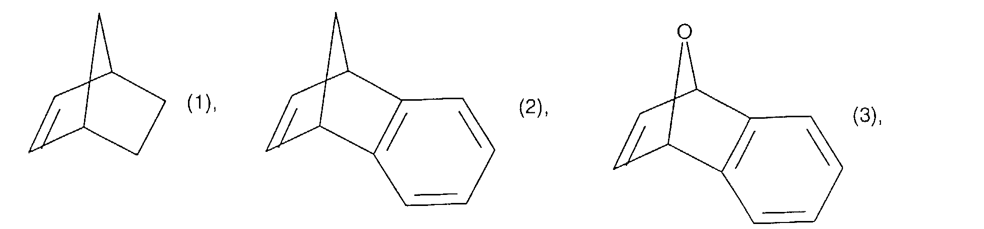

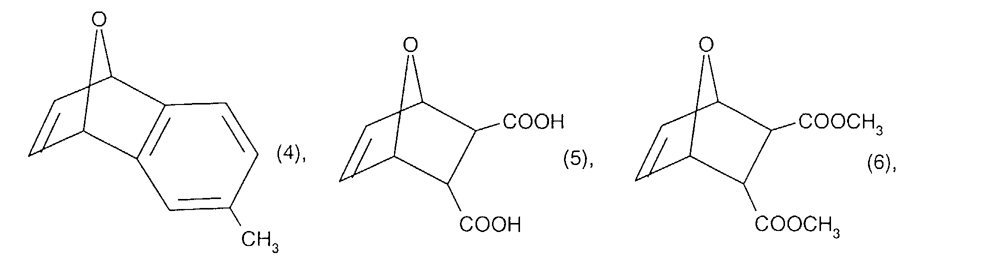

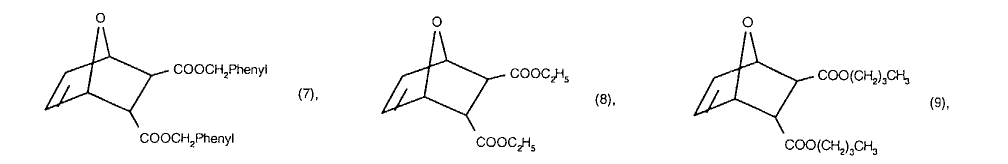

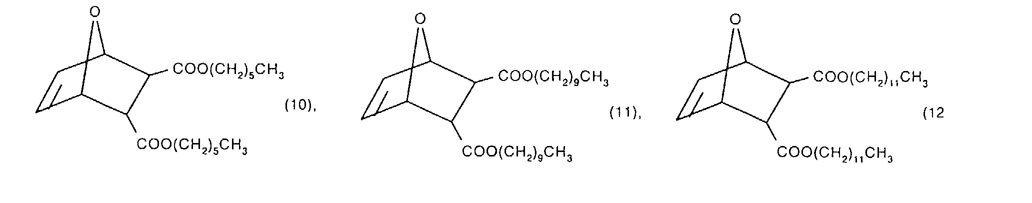

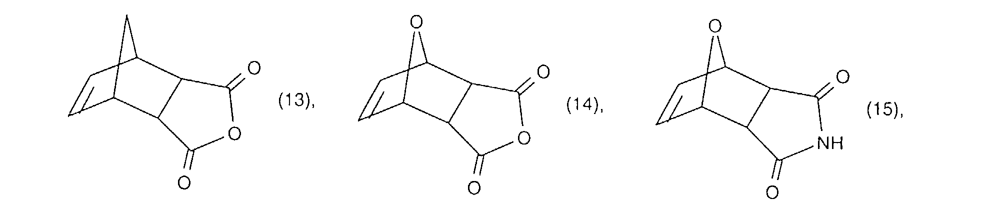

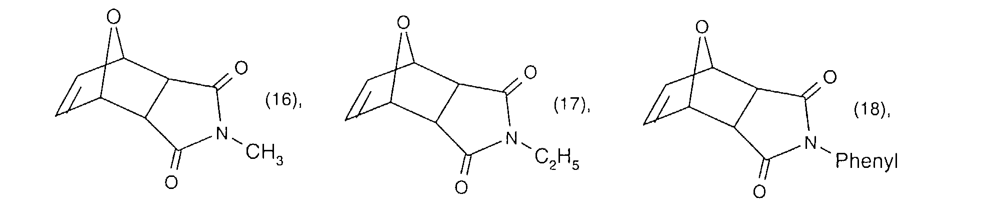

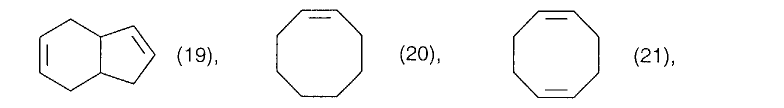

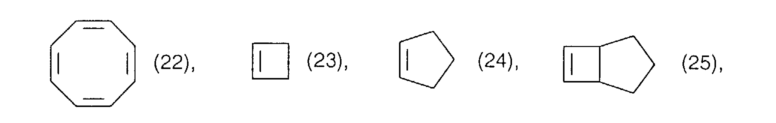

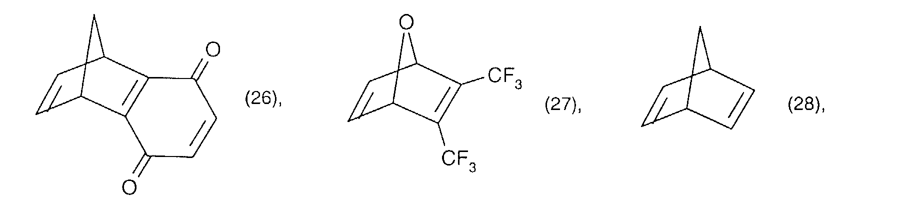

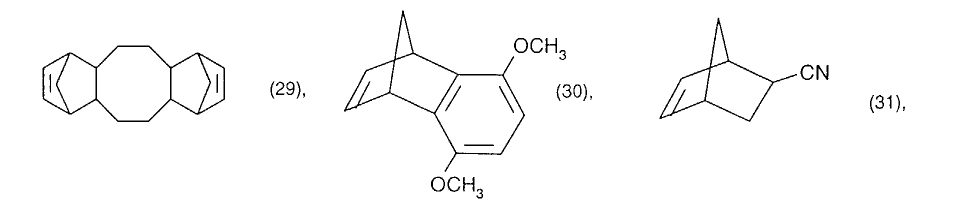

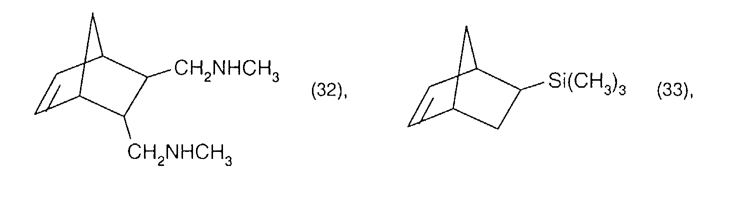

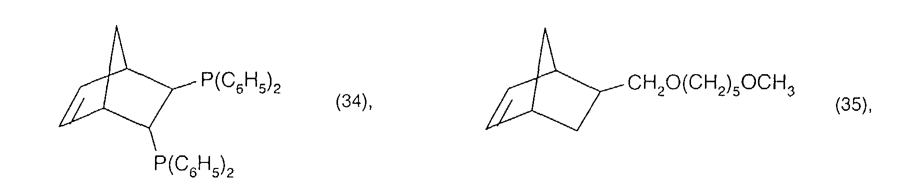

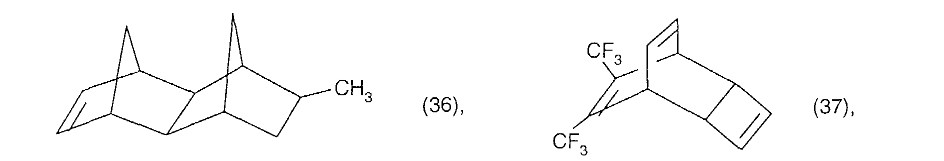

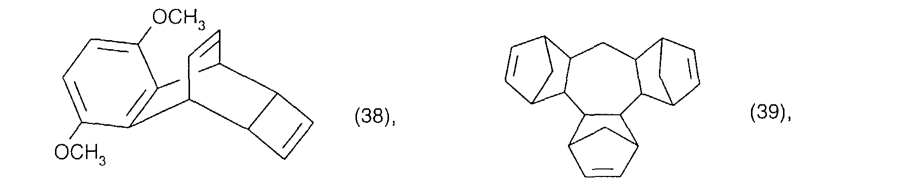

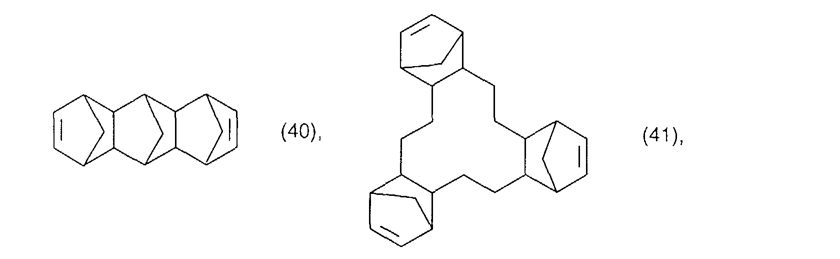

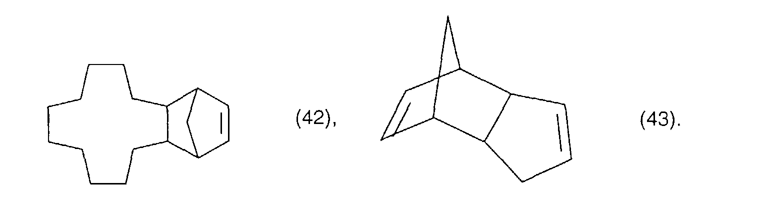

In einer bevorzugten Ausführungsform enthalten die gespannten Cycloolefine nur Kohlenstoff- und Wasserstoffatome, und vorzugsweise handelt es sich um 5- oder 6-gliedrige Ringe oder Ringsysteme mit einem bis drei 5- oder 6-gliedrigen Ringen, zum Beispiel um Norbornen, alkylierte Norbornene und Dicyclopentadien.

Besonders bevorzugt als Komponente (a) ist Dicyclopentadien.

Als Katalysatoren für die ringöffnende Metathese-Polymerisation (ROMP-Katalysatoren) ist dem Fachmann eine grosse Zahl von Verbindungen der Übergangsmetalle Titan, Vanadium, Molybdän, Wolfram, Rhenium, Iridium, Ruthenium und Osmium bekannt. Hierbei handelt es sich beispielsweise um komplexe Metallhalogenide, Metallo-Carbene oder Koordinations-Katalysatoren vom Ziegler-Natta-Typ. Alle diese bekannten ROMP-Katalysatoren können im Prinzip als Komponente (b) in den erfindungsgemässen Zusammensetzungen verwendet werden.

Vorzugsweise wird ein Ruthenium(+ll)-Komplexsalz oder ein Osmium(+ll)-Komplexsalz, besonders bevorzugt ein Ruthenium(+ll)-Komplexsalz, als Komponente (b) verwendet.

Da die Füllstoffe gemäss Komponente (c) oft geringe Mengen Wasser enthalten, empfiehlt es sich feuchtigkeitsunempfindliche ROMP-Katalysatoren einzusetzen, wie z.B. die in WO 96/16100 und WO 96/20235 beschriebenen Ruthenium(+II)-und Osmium(+II)-Komplexsalze.

Bevorzugt als Komponente (b) ist daher ein Komplexsalz der Formel III

(R₂₉R₃₀R₃₁P)ₓ L_{y}Me²⁺Z₁⁻ Z₂⁻ (III),

worin
R₂₉, R₃₀ und R₃₁ unabhängig voneinander H, C₁-C₂₀-Alkyl, C₁-C₂₀-Alkoxy, unsubstituiertes oder mit C₁-C₆-Alkyl, C₁-C₆-Halogenalkyl oder C₁-C₆-Alkoxy substituiertes C₄-C₁₂-Cycloalkyl oder Cycloalkoxy, oder unsubstituiertes oder mit C₁-C₆-Alkyl, C₁-C₆-Halogenalkyl oder C₁-C₆-Alkoxy substituiertes C₆-C₁₆-Aryl oder C₆-C₁₆-Aryloxy, oder unsubstituiertes oder mit C₁-C₆-Alkyl, C₁-C₆-Halogenalkyl oder C₁-C₆-Alkoxy substituiertes C₇-C₁₆-Aralkyl oder C₇-C₁₆-Aralkyloxy darstellt; die Reste R₃₀ und R₃₁ gemeinsam unsubstituiertes oder mit C₁-C₆-Alkyl, C₁-C₆-Halogenalkyl oder C₁-C₆-Alkoxy substituiertes Tetra- oder Pentamethylen, oder Tetra- oder Pentamethylendioxyl bedeuten, oder unsubstituiertes oder mit C₁-C₆-Alkyl, C₁-C₆-Halogenalkyl oder C₁-C₆-Alkoxy substituiertes und mit 1 oder 2 1,2-Phenylen kondensiertes Tetra- oder Pentamethylen, oder Tetra- oder Pentamethylendioxyl darstellen, oder unsubstituiertes oder mit C₁-C₆-Alkyl, C₁-C₆-Halogenalkyl oder C₁-C₆-Alkoxy substituiertes und in den 1,2- und 3,4-Stellungen mit 1,2-Phenylen kondensiertes Tetramethylendioxyl darstellen, und R₃₁ die zuvor angebene Bedeutung hat;
L einen Neutralliganden bedeutet, Me für Ru oder Os steht, Z₁⁻ und Z₂⁻ je ein einfach geladenes Anion oder Z₁⁻ und Z₂⁻ zusammen ein zweifach geladenes Anion darstellen, x eine Zahl von 1 bis 3 und y eine Zahl von 0 bis 3 darstellen, wobei gilt 2 ≤ x+y ≤ 4.

Die Liganden L können in den Verbindungen der Formel III gleich oder verschieden sein.

Die Ruthenium- und Osmiumverbindungen der Formel III sind bekannt oder nach bekannten Verfahren aus den Metallhalogeniden (zum Beispiel MeX₃ oder [MeArenX₂]₂ durch Reaktion mit Phosphinen der Formel IV

R₂₉R₃₀R₃₁P (IV),

worin R₂₉, R₃₀, und R₃₁ dieselbe Bedeutung wie in Formel (III) haben, und Ligandenbildnern herstellbar.

Bei den Resten R₂₉, R₃₀ und R₃₁ handelt es sich bevorzugt um gleiche Reste. Ferner sind sterisch anspruchsvolle Reste bevorzugt, zum Beispiel verzweigtes, insbesondere α-verzweigtes, Alkyl oder Alkoxy oder cyclische Reste.

R₂₉, R₃₀ und R₃₁ kann als Alkyl linear oder verzweigt sein und bevorzugt 1 bis 12, besonders bevorzugt 1 bis 8, und ganz besonders bevorzugt 1 bis 6 C-Atome enthalten. Beispiele für Alkyl sind Methyl, Ethyl, n- und i-Propyl, n-, i- und t-Butyl, die Isomeren von Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl und Eicosyl. Bevorzugte Beispiele sind Methyl, Ethyl, n- und i-Propyl, n-, i- und t-Butyl, 1-, 2- oder 3-Pentyl und 1-, 2-, 3- oder 4-Hexyl.

R₂₉, R₃₀ und R₃₁ kann als Alkoxy linear oder verzweigt sein und bevorzugt 1 bis 12, besonders bevorzugt 1 bis 8, und ganz besonders bevorzugt 1 bis 6 C-Atome enthalten. Beispiele für Alkoxy sind Methoxy, Ethoxy, n- und i-Propyloxy, n-, i- und t-Butyloxy, die Isomeren von Pentyloxy, Hexyloxy, Heptyloxy, Octyloxy, Nonyloxy, Decyloxy, Undecyloxy, Dodecyloxy, Tridecyloxy, Tetradecyloxy, Pentadecyloxy, Hexadecyloxy, Heptadecyloxy, Octadecyloxy und Eicosyloxy. Bevorzugte Beispiele sind Methoxy, Ethoxy, n- und i-Propyloxy, n-, i- und t-Butyloxy, 1-, 2- oder 3-Pentyloxy und 1-, 2-, 3- oder 4-Hexyloxy.

Sofern R₂₉, R₃₀ und R₃₁ substituiert sind, handelt es bei den Substituenten bevorzugt um C₁-C₄-Alkyl, C₁-C₄-Halogenalkyl oder C₁-C₄-Alkoxy. Halogen bedeutet bevorzugt Cl und besonders bevorzugt F. Beispiele für bevorzugte Substituenten sind Methyl, Methoxy, Ethyl, Ethoxy und Trifluormethyl. R₂₉, R₃₀ und R₃₁ sind bevorzugt mit 1 bis 3 Substituenten substituiert.

Bedeuten R₂₉, R₃₀ und R₃₁ Cycloalkyl, so handelt es sich bevorzugt um C₅-C₈-Cycloalkyl, und besonders bevorzugt um C₅- oder C₆-Cycloalkyl. Einige Beispiele sind Cyclobutyl, Cycloheptyl, Cyclooctyl und besonders Cyclopentyl und Cyclohexyl. Beispiele für substituiertes Cycloalkyl sind Methyl-, Dimethyl-, Trimethyl-, Methoxy-, Dimethoxy-, Trimethoxy-, Trifluormethyl-, Bis(trifluormethyl)- und Tris(trifluormethyl)cyclopentyl und -cyclohexyl.

Bedeuten R₂₉, R₃₀ und R₃₁ Cycloalkyloxy, so handelt es sich bevorzugt um C₅-C₈-Cycloalkyloxy, und besonders bevorzugt um C₅- oder C₆-Cycloalkyloxy. Einige Beispiele sind Cyclobutyloxy, Cycloheptyloxy, Cyclooctyloxy und besonders Cyclopentyloxy und Cyclohexyloxy. Beispiele für substituiertes Cycloalkyl sind Methyl-, Dimethyl-, Trimethyl-, Methoxy-, Dimethoxy-, Trimethoxy-, Trifluormethyl-, Bis(trifluormethyl)- und Tris(trifluormethyl)cyclopentyloxy und -cyclohexyloxy.

Bedeuten R₂₉, R₃₀ und R₃₁ Aryl, so handelt es sich bevorzugt um C₆-C₁₂-Aryl und besonders bevorzugt um Phenyl oder Naphthyl. Beispiele für substituiertes Aryl sind Methyl-, Dimethyl-, Trimethyl-, Methoxy-, Dimethoxy-, Trimethoxy-, Trifluormethyl-, Bis(trifluormethyl)- und Tris(trifluormethyl)phenyl.

Bedeuten R₂₉, R₃₀ und R₃₁ Aryloxy, so handelt es sich bevorzugt um C₆-C₁₂-Aryloxy und besonders bevorzugt um unsubstituiertes oder substituiertes Phenyloxy oder Naphthyloxy. Beispiele für substituiertes Aryloxy sind Methyl-, Dimethyl-, Trimethyl-, Methylisopropyl-, Isopropyl-, Diisopropyl-, Triisopropyl-, Tert.-butyl-, Methyltert.-butyl-, Di-(tert.-butyl)-, Tri-(tert.-butyl)-, Methoxy-, Dimethoxy-, Trimethoxy-, Trifluormethyl-, Bis(trifluormethyl)- und Tris(trifluormethyl)phenyloxy.

Bedeuten R₂₉, R₃₀ und R₃₁ Aralkyl, so handelt es sich bevorzugt um C₇-C₁₃-Aralkyl, wobei die Alkylengruppe im Aralkyl bevorzugt Methylen darstellt. Besonders bevorzugt stellt das Aralkyl Benzyl dar. Beispiele für substituiertes Aralkyl sind Methyl-, Dimethyl-, Trimethyl-, Methoxy-, Dimethoxy-, Trimethoxy-, Trifluormethyl-, Bis(trifluormethyl)- und Tris(trifluormethyl)benzyl.

Bedeuten R₂₉, R₃₀ und R₃₁ Aralkyloxy, so handelt es sich bevorzugt um unsubstituiertes oder substituiertes C₇-C₁₃-Aralkyloxy, wobei die Alkylengruppe im Aralkyloxy bevorzugt Methylen darstellt. Besonders bevorzugt stellt das Aralkyloxy unsubstituiertes oder substituiertes Benzyloxy dar. Beispiele für substituiertes Aralkyloxy sind Methyl-, Dimethyl-, Trimethyl-, Methoxy-, Dimethoxy-, Trimethoxy-, Trifluormethyl-, Bis(trifluormethyl)- und Tris(trifluormethyl)benzyloxy.

Besonders bevorzugt sind Komplexsalze der Formel III, worin R₂₉, R₃₀ und R₃₁ für C₁-C₆-Alkyl, C₁-C₆-Alkoxy, C₄-C₁₂-Cycloalkyl, C₄-C₁₂-Cycloalkoxy, C₆-C₁₆-Aryl oder C₆-C₁₆-Aryloxy stehen.

Insbesondere bevorzugt sind Komplexsalze der Formel III, worin R₂₉, R₃₀ und R₃₁ für Phenyl, Tolyl oder Cyclohexyl stehen.

Beispiele für geeignete Phosphine der Formel IV sind (C₆H₅)₃P, (C₆H₅CH₂)₃P, (C₅H₁₁)₃P, (CH₃)₃P, (C₂H₅)₃P, (n-C₃H₇)₃P, (i-C₃H₇)₃P, (n-C₄H₉)₃P, (C₆H₅)₂HP, (C₆H₅CH₂)₂HP, (C₅H₁₁)₂HP, (CH₃)₂HP, (C₂H₅)₂HP, (n-C₃H₇)₂HP, (i-C₃H₇)₂HP, (n-C₄H₉)₂HP, (C₆H₅)H₂P, (C₆H₅CH₂)H₂P, (C₅H₁₁)H₂P, (CH₃)H₂P, (C₂H₅)H₂P, (n-C₃H₇)H₂P, (i-C₃H₇)H₂P, (n-C₄H₉)H₂P, PH₃, (2-CH₃-C₆H₄)₃P, (3-CH₃-C₆H₄)₃P, (4-CH₃-C₆H₄)₃P, (2,4-Di-CH₃-C₆H₃)₃P, (2,6-Di-CH₃-C₆H₃)₃P, (2-C₂H₅-C₆H₄)₃P, (3-C₂H₅-C₆H₄)₃P, (4-C₂H₅-C₆H₄)₃P, (2-n-C₃H₇-C₆H₄)₃P, (3-n-C₃H₇-C₆H₄)₃P, (4-n-C₃H₇-C₆H₄)₃P, (2-i-C₃H₇-C₆H₄)₃P, (3-i-C₃H₇-C₆H₄)₃P, (4-i-C₃H₇-C₆H₄)₃P, (2-n-C₄H₉-C₆H₄)₃P, (3-n-C₄H₉-C₆H₄)₃P, (4-n-C₄H₉-C₆H₄)₃P, (2-i-C₄H₉-C₆H₄)₃P, (3-i-C₄H₉-C₆H₄)₃P, (4-i-C₄H₉-C₆H₄)₃P, (2-t-C₄H₉-C₆H₄)₃P, (3-t-C₄H₉-C₆H₄)₃P, (4-t-C₄H₉-C₆H₄)₃P, (2-CH₃-6-t-C₄H₉-C₆H₃)₃P, (3-CH₃-6-t-C₄H₉-C₆H₃)₃P, (3-CH₃-6-t-C₄H₉-C₆H₃)₃P, (2,6-Di-t-C₄H₉-C₆H₃)₃P, (2,3-Di-t-C₄H₉-C₆H₃)₃P, (2,4-Di-t-C₄H₉-C₆H₃)₃P.

Besonders bevorzugte Phosphine sind Triisopropylphosphin, Tri-tert.-butylphosphin und Tricyclohexylphosphin.

Bei den in den Verbindungen der Formel III an das Metallatom gebundenen Liganden L kann es sich um photolabile oder um nicht-photolabile Liganden handeln.

Bei Verbindungen der Formel III mit photolabilen Liganden wird die katalytische Aktivität durch Einwirkung von Licht erzielt, d.h. bei Bestrahlung des Katalysators mit Licht im sichtbaren oder ultravioletten Bereich wird der photolabile Ligand abgespalten, wobei eine katalytisch aktive Spezies für die Metathesepolymerisation gebildet wird.

Bei den photolabilen Liganden kann es sich zum Beispiel um Stickstoff (N₂), um unsubstituierte oder mit OH, C₁-C₄-Alkyl, C₁-C₄-Alkoxy, C₆-C₁₂-Aryl oder Halogen substituierte monocyclische, polycyclische oder kondensierte Arene mit 6 bis 24, bevorzugt 6 bis 18 und besonders bevorzugt 6 bis 12 C-Atomen oder um unsubstituierte oder mit C₁-C₄-Alkyl, C₁-C₄-Alkoxy oder Halogen substituierte monocyclische Heteroarene, kondensierte Heteroarene oder kondensierte Aren-Heteroarene mit 3 bis 22, bevorzugt 4 bis 16 und besonders 4 bis 10 C-Atomen und 1 bis 3 Heteroatomen ausgewählt aus der Gruppe O, S und N; oder um unsubstituierte oder mit C₁-C₄-Alkyl, C₁-C₄-Alkoxy oder Halogen substituierte aliphatische, cycloaliphatische, aromatische oder araliphatische Nitrile mit 1 bis 22, bevorzugt 1 bis 18, besonders bevorzugt 1 bis 12 und ganz besonders bevorzugt 1 bis 7 C-Atomen handeln. Die bevorzugten Substituenten sind Methyl, Ethyl, Methoxy, Ethoxy, Fluor, Chlor und Brom. Die Arene und Heteroarene sind bevorzugt mit einem bis drei Resten substituiert. Unter den Heteroarenen sind die elektronenreichen Heteroarene bevorzugt.

Einige Beispiele für Arene und Heteroarene sind Benzol, Biphenyl, Naphthalin, Anthracen, Acenaphthen, Fluoren, Phenanthren, Pyren, Chrysen, Fluoranthren, Furan, Thiophen, Pyrrol, Pyridin, γ-Pyran, γ-Thiopyran, Pyrimidin, Pyrazin, Indol, Cumaron, Thionaphthen, Carbazol, Dibenzofuran, Dibenzothiophen, Pyrazol, Imidazol, Benzimidazol, Oxazol, Thiazol, Isoxazol, Isothiazol, Chinolin, Isochinolin, Acridin, Chromen, Phenazin, Phenoxazin, Phenothiazin, Triazin, Thianthren und Purin. Bevorzugte Arene und Heteroarene sind unsubstituiertes oder substituiertes Benzol, Naphthalin, Thiophen und Benzthiophen. Das Aren ist besonders bevorzugt unsubstituiertes oder mit 1 bis 3 C₁-C₄-Alkyl substituiertes Benzol und das Heteroaren ist bevorzugt Thiophen.

Die Nitrile können zum Beispiel mit Methoxy, Ethoxy, Fluor oder Chlor substituiert sein; bevorzugt sind die Nitrile unsubstituiert. Die Alkylnitrile sind bevorzugt linear. Einige Beispiele für Nitrile sind Acetonitril, Propionitril, Butyronitril, Pentylnitril, Hexylnitril, Cyclopentyl- und Cyclohexylnitril, Benzonitril, Methylbenzonitril, Benzylnitril und Naphthylnitril. Bei den Nitrilen handelt es sich bevorzugt um lineare C₁-C₄-Alkylnitrile oder Benzonitril. Von den Alkylnitrilen ist Acetonitril besonders bevorzugt.

In einer bevorzugten Untergruppe handelt es sich bei den photolabilen Liganden um N₂, unsubstituiertes oder mit ein bis drei C₁-C₄-Alkyl substituiertes Benzol, Thiophen, Benzonitril oder Acetonitril.

Nicht-photolabiler Ligand (auch als stark koordinierender Ligand bezeichnet) bedeutet im Rahmen der vorliegenden Erfindung, daß der Ligand bei Bestrahlung des Katalysators im sichtbaren oder nahen ultravioletten Spektralbereich nicht oder nur in unwesentlichem Ausmaß vom Katalysator dissoziiert.

Bei den nicht-photolabilen Liganden kann es sich zum Beispiel um die Heteroatome O, S oder N enthaltende und solvatisierende anorganische und organische Verbindungen, die häufig auch als Lösungsmittel verwendet werden. Beispiele für solche Verbindungen sind H₂O, H₂S, NH₃; gegebenenfalls halogenierte, besonders fluorierte oder chlorierte aliphatische oder cycloaliphatische Alkohole oder Mercaptane mit 1 bis 18, bevorzugt 1 bis 12 und besonders bevorzugt 1 bis 6 C-Atomen, aromatische Alkohole oder Thiole mit 6 bis 18, bevorzugt 6 bis 12 C-Atomen, araliphatische Alkohole oder Thiole mit 7 bis 18, bevorzugt 7 bis 12 C-Atomen; offenkettige oder cyclische und aliphatische, araliphatische oder aromatische Ether, Thioether, Sulfoxide, Sulfone, Ketone, Aldehyde, Carbonsäureester, Lactone, gegebenenfalls N-C₁-C₄-mono- oder -dialkylierte Carbonsäureamide mit 2 bis 20, bevorzugt 2 bis 12 und besonders 2 bis 6 C-Atomen, und gegebenenfalls N-C₁-C₄-alkylierte Lactame; offenkettige oder cyclische und aliphatische, araliphatische oder aromatische, primäre, sekundäre und tertiäre Amine mit ein bis 20, bevorzugt 1 bis 12 und besonders bevorzugt 1 bis 6 C-Atomen.

Beispiele für solche nicht-photolabilen Liganden sind Methanol, Ethanol, n- und i-Propanol, n-, i- und t-Butanol, 1,1,1-Trifluorethanol, Bistrifluormethylmethanol, Tristrifluormethylmethanol, Pentanol, Hexanol, Methyl- oder Ethylmercaptan, Cyclopentanol, Cyclohexanol, Cyclohexylmercaptan, Phenol, Methylphenol, Fluorphenol, Phenylmercaptan, Benzylmercaptan, Benzylalkohol, Diethylether, Dimethylether, Diisopropylether, Di-n- oder Di-t-butylether, Tetrahydrofuran, Tetrahydropyran, Dioxan, Diethylthioether, Tetrahydrothiophen, Dimethylsulfoxid, Diethylsulfoxid, Tetra- und Pentamethylensulfoxid, Dimethylsulfon, Diethylsulfon, Tetra- und Pentamethylensulfon, Aceton, Methylethylketon, Diethylketon, Phenylmethylketon, Methylisobutylketon, Benzylmethylketon, Acetaldehyd, Propionaldehyd, Trifluoracetaldehyd, Benzaldehyd, Essigsäureethylester, Butyrolacton, Dimethylformamid, Dimethylacetamid, Pyrrolidon und N-Methylpyrrolidon.

Die primären Amine können der Formel R₂₆NH₂, die sekundären Amine der Formel R₂₆R₂₇NH und die tertiären Amine der Formel R₂₆R₂₇R₂₈N entsprechen, worin R₂₆ C₁-C₁₈-Alkyl, unsubstituiertes oder mit C₁-C₄-Alkyl oder C₁-C₄-Alkoxy substituiertes C₅- oder C₆-Cycloalkyl, oder unsubstituiertes oder mit C₁-C₄-Alkyl oder C₁-C₄-Alkoxy substituiertes C₆-C₁₈-Aryl oder C₇-C₁₂-Aralkyl darstellt, R₂₇ unabhängig die Bedeutung von R₂₆ hat oder R₂₆ und R₂₇ gemeinsam Tetramethylen, Pentamethylen, 3-Oxa-1,5-pentylen oder -CH₂-CH₂-NH-CH₂-CH₂- oder -CH₂-CH₂-N(C₁-C₄-Alkyl)-CH₂-CH₂- bedeuten, und R₂₈ unabhängig die Bedeutung von R₂₆ hat. Das Alkyl enthält bevorzugt 1 bis 12 und besonders bevorzugt 1 bis 6 C-Atome. Das Aryl enthält bevorzugt 6 bis 12 C-Atome und das Aralkyl enthält bevorzugt 7 bis 9 C-Atome. Beispiele für Amine sind Methyl-, Dimethyl-, Trimethyl-, Ethyl-, Diethyl-, Triethyl-, Methylethyl-, Dimethylethyl-, n-Propyl-, Di-n-propyl-, Tri-n-butyl-, Cyclohexyl-, Phenyl- und Benzylamin, sowie Pyrrolidin, N-Methylpyrrolidin, Piperidin, Piperazin, Morpholin und N-Methylmorpholin.

Vorzugsweise enthalten die erfindungsgemässen Zusammensetzungen als Komponente (b) ein Komplexsalz der Formel III, worin L für ein Aren, Heteroaren, Nitril, Stickstoff (N₂), Alkohol, Amin, CO, H₂O oder NH₃ steht.

Besonders bevorzugt als Komponente (b) ist ein Komplexsalz der Formel III, worin L für unsubstituiertes oder mit 1 bis 3 C₁-C₄-Alkyl substituiertes Benzol, Thiophen, Benzonitril, Acetonitril, Stickstoff (N₂), einen unsubstituierten oder teilweise oder vollständig fluorierten C₁-C₄-Alkohol, CO, H₂O oder NH₃ steht.

In den Verbindungen der Formel III können Z₁⁻ und Z₂⁻ für je ein einfach geladenes Anion stehen, wobei Z₁⁻ und Z₂⁻ gleich oder verschieden sein können, oder Z₁⁻ und Z₂⁻ können zusammen ein zweifach geladenes Anion darstellen.

Geeignete Anionen sind zum Beispiel Hydrid (H⁻), Halogenid (zum Beispiel Cl⁻, Br⁻ und I⁻), BF₄⁻, PF₆⁻, SbF₆⁻, AsF₆⁻, unsubstituiertes oder mit C₁-C₄-Alkyl, C₁-C₄-Alkoxy, (C₁-C₄-Alkyl)₃Si- oder (C₁-C₄-Alkyl)₃SiO- substituiertes Cyclopentadienyl⁻, oder Indenyl⁻, sowie die Anionen von Sauerstoffsäuren.

Weitere geeignete Anionen sind C₁-C₁₂-, bevorzugt C₁-C₆- und besonders bevorzugt C₁-C₄-Alkoholate, die insbesondere verzweigt sind, zum Beispiel der Formel RₓR_{y}R_{z}C-O⁻ entsprechen, worin Rₓ H oder C₁-C₁₀-Alkyl, R_{y} C₁-C₁₀-Alkyl und R_{z} C₁-C₁₀-Alkyl oder Phenyl darstellen. Beispiele sind besonders i-Propyloxy und t-Butyloxy.

Andere geeignete Anionen sind C₃-C₁₈-, bevorzugt C₅-C₁₄- und besonders bevorzugt C₅-C₁₂-Acetylide, die der Formel R_{w}-C≡C⁻, entsprechen können, worin R_{w} C₁-C₁₆-Alkyl, bevorzugt α-verzweigtes C₃-C₁₂-Alkyl, zum Beispiel Formel RₓR_{y}R_{z}C-, bedeutet, oder unsubstituiertes oder mit ein bis 3 C₁-C₄-Alkyl oder C₁-C₄-Alkoxy substituiertes Phenyl oder Benzyl darstellt. Einige Beispiele sind i-Propylacetylid, i- und t-Butylacetylid, Phenylacetylid, Benzylacetylid, 2-Methylphenylacetylid, 2-i-Propylphenylacetylid, 2-i- Propyl-6-methylphenylacetylid, 2-t-Butylphenylacetylid, 2,6-Di-t-butylphenylacetylid und 2-Methyl-6-t-butylphenylacetylid.

Bei den Anionen von Sauerstoffsäuren kann es sich zum Beispiel um Sulfat, Phosphat, Perchlorat, Perbromat, Periodat, Antimonat, Arsenat, Nitrat, Carbonat, das Anion einer C₁-C₈-Carbonsäure, wie zum Beispiel Formiat, Acetat, Propionat, Butyrat, Benzoat, Phenylacetat, Mono-, Di- oder Trichlor- oder -fluoracetat, Sulfonate, wie zum Beispiel Methylsulfonat, Ethylsulfonat, Propylsulfonat, Butylsulfonat, Trifluormethylsulfonat (Triflat), gegebenenfalls mit C₁-C₄-Alkyl, C₁-C₄-Alkoxy oder Halogen, besonders Fluor, Chlor oder Brom substituiertes Phenylsulfonat oder Benzylsulfonat, wie zum Beispiel Tosylat, Mesylat, Brosylat, p-Methoxy- oder p-Ethoxyphenylsulfonat, Pentafluorphenylsulfonat oder 2,4,6-Triisopropylsulfonat, und Phosphonate, wie zum Beispiel Methylphosphonat, Ethylphosphonat, Propylphoshonat, Butylphosphonat, Phenylphosphonat, p-Methylphenylphosphonat und Benzylphosphonat, handeln.

Vorzugsweise stehen Z₁⁻ und Z₂⁻ in der Formel III für H⁻, Cl⁻, Br⁻, BF₄⁻, PF₆⁻, SbF₆⁻, AsF₆⁻, CF₃SO₃⁻, C₆H₅-SO₃⁻, p-Toluolsulfonat (Tosylat), 3,5-Dimethylphenylsulfonat, 2,4,6-Trimethylphenylsulfonat, 4-Trifluormethylphenylsulfonat oder Cyclopentadienyl.

Besonders bevorzugte ROMP-Katalysatoren der Formel III sind [(Cyclohexyl)₃P]₂RuCl₂, [(C₆H₅)₃P]₃ RuCl₂, [(C₆H₅)₃P]₃ (CO)RuH₂, [(C₆H₅)₃P]₃ RuCl(Cyclopentadienyl), [(Cyclohexyl)₃P]₂(CH₃OH)Ru(Tosylat)₂, [(o-Tolyl)₃P]₃RuCl₂, [(CH₃)₂CH]₃P(p-Cymol)RuCl₂ und insbesondere (Cyclohexyl)₃P(p-Cymol)RuCl₂.

Geeignete Füllstoffe, die als Komponente (c) in den erfindungsgemässen Zusammensetzungen verwendet werden können, sind beispielsweise Metallpulver, Holzmehl, Glaspulver, Glaskugeln, Halbmetall- und Metalloxide, wie zum Beispiel SiO₂ (Aerosile, Quarz, Quarzmehl, Quarzgut), Korund und Titanoxid, Halbmetall- und Metallnitride, wie zum Beispiel Siliziumnitrid, Bornitrid und Aluminiumnitrid, Halbmetall- und Metallcarbide (SiC), Metallcarbonate (Dolomit, Kreide, CaCO₃), Metallsulfate (Baryt, Gips), Gesteinsmehle und natürliche oder synthetische Mineralien hauptsächlich aus der Silikatreihe, wie zum Beispiel Talkum, Glimmer, Kaolin,Wollastonit, Bentonit und andere.

Vorzugsweise wird ein Metalloxid, -carbonat, -sulfat oder -silikat oder Si02 als Komponente (c) verwendet.

Bevorzugte Füllstoffe sind Al₂O₃, Al(OH)₃, CaCO₃, CaSiO₃, SiO₂, Glasfaser-, Kohlefaser- und Aramidfasergewebe.

Besonders bevorzugt als Komponente (c) sind Al₂O₃, Al(OH)₃, Wollastonit, Quarzmehl, Dolomit, Kalk, Kreide, Glasfaser-, Kohlefaser- und Aramidfasergewebe.

Die Silane der Formel I sind bekannt und können nach bekannten Methoden hergestellt werden. Zum Teil sind diese Silane kommerziell erhältlich.

Bevorzugt sind Silane der Formel I, worin R als einwertige organische Gruppe mit 2 bis 100 C-Atomen für C₁-C₂₀-Alkyl, C₅-C₂₀-Aryl, C₆-C₂₀-Aralkyl, C₅-C₁₂-Cycloalkyl, C₂-C₂₀-Alkoxyalkyl, C₂-C₂₀-Alkenyl, C₄-C₂₅-Acryloxyalkyl, C₄-C₂₅-Methacryloxyalkyl, C₂-C₂₀-Aminoalkyl, C₄-C₂₅-Glycidyloxyalkyl, C₇-C₂₅-Epoxycyclohexylalkyl oder den Rest eines Polysiloxans steht.

Alkyl als R, Y₁, Y₂ oder Y₃ umfasst beispielsweise Methyl, Ethyl, Isopropyl, n-Propyl, n-Butyl, Isobutyl, sek.-Butyl, tert.-Butyl sowie die verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Aryl als R, Y₁, Y₂ oder Y₃ enthält bevorzugt 6 bis 10 C-Atome. Es kann sich beispielsweise um Phenyl, Pentalinyl, Indenyl, Naphtyl, Azulinyl und Anthryl handeln.

Aralkyl als R, Y₁, Y₂ oder Y₃ enthält bevorzugt 7 bis 12 C-Atome und besonders bevorzugt 7 bis 10 C-Atome. Es kann sich zum Beispiel um Benzyl, Phenethyl, 3-Phenylpropyl, α-Methylbenzyl, 4-Phenylbutyl und α,α-Dimethylbenzyl handeln.

Bei Cycloalkyl als R, Y₁, Y₂ oder Y₃ handelt es sich bevorzugt um C₅-C₈-Cycloalkyl, besonders um C₅- oder C₆-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Beispiele für Alkoxyalkyl als R, Y₁, Y₂ oder Y₃ sind 2-Methoxyethyl, 2-Ethoxyethyl, 2-Methoxypropyl, 3-Methoxypropyl, 2-Ethoxypropyl und 3-Ethoxypropyl.

Alkenyl als R umfaßt zum Beispiel Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, Isododecenyl, n-Octadec-2-enyl und n-Octadec-4-enyl.

Beispiele für Acryloxyalkyl und Methacryloxyalkyl sind 2-Acryloxyethyl, 2-Methacryloxyethyl, 3-Acryloxypropyl und 3-Methacryloxypropyl.

Geeignete Aminoalkylgruppen sind zum Beispiel 2-Aminoethyl, 3-Aminopropyl, 3-Aminobutyl und 4-Aminobutyl.

Als Glycidyloxyalkylgruppen kommen beispielsweise 2-Glycidyoxylethyl, 3-Glycidyloxypropyl, 3-Glycidyloxybutyl und 4-Glycidyloxybutyl in Betracht.

Epoxycyclohexylalkyl ist vorzugsweise β-(3,4-Epoxycyclohexyl)ethyl.

R in der Formel I bedeutet vorzugsweise Methyl, Ethyl, n-Octyl, Vinyl, 3-Mercaptopropyl, 3-Aminopropyl, 3-Glycidyloxypropyl, 3-Acryloxypropyl, 3-Methacryloxypropyl, β-(3,4-Epoxycyclohexyl)ethyl, N-(β-Aminoethyl)-3-aminopropyl, 3-Ureidopropyl, 3-lsocyanatopropyl, H₂N-CH₂CH₂NH-CH₂CH₂NH-CH₂CH₂CH₂-, (CH₃O)₃Si-CH₂CH₂CH₂NH-CH₂CH₂CH₂- oder eine Gruppe der Formel 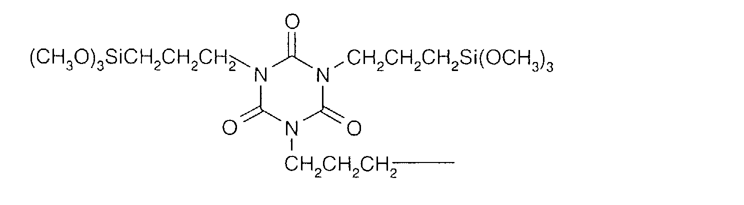 Bevorzugt sind Silane der Formel I, worin R für Methyl, Vinyl, 3-Mercaptopropyl oder 3-Aminopropyl steht.
Y₁, Y₂ und Y₃ sind in der Formel I vorzugsweise Methyl, Ethyl, Acetyl oder 2-Methoxyethyl.

Beispiele für geeignete Silane der Formel I sind Octyltriethoxysilan, Methyltriethoxysilan, Methyltrimethoxysilan, tris-[3-(Trimethoxysilyl)propyl]isocyanurat, Vinyltriethoxysilan, Vinyltrimethoxysilan, Vinyl-tris-(2-methoxyethoxy)silan, γ-Methacryloxypropyltrimethoxysilan, β-(3,4-Epoxycyclohexyl)ethyltrimethoxysilan, γ-Glycidyloxypropyltrimethoxysilan, γ-Mercaptopropyltrimethoxysilan, γ-Aminopropyltriethoxysilan, γ-Aminopropyltrimethoxysilan, N-(β-Aminoethyl)-γ-aminopropyltrimethoxysilan, H₂NCH₂CH₂NHCH₂CH₂NHCH₂CH₂CH₂Si(OCH₃)₃, Bis-[γ-(Trimethoxysilyl)propyl]amin, organisch modifiziertes Polydimethylsiloxan der Formel 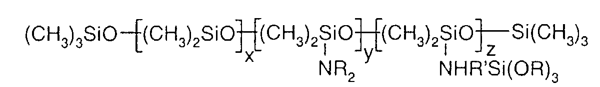 mit R und R' = Alkyl oder Aryl, γ-Ureidopropyltrimethoxysilan, γ-lsocyanatopropyltriethoxysilan, 3-Chlorpropyltrimethoxysilan, 3-Triethoxysilylpropylbernsteinsäureanhydrid, 3-Methacryloxypropyltrimethoxysilan, Vinyltris(2-methoxyethoxy)silan, Vinyltriacetoxysilan, 3-Mercaptopropyltrimethoxysilan, 3-Glycidyloxypropyltriethoxysilan, 3-(2-Aminoethylamino)propyltrimethoxysilan und 3-(2-Aminoethylamino)propylmethyldimethoxysilan.

Besonders bevorzugt als Komponente (d) ist Vinyltrimethoxysilan.

Zu erwähnen ist, dass bei Verwendung von Quarzmehl als Füllstoff anstelle eines Gemisches der Komponenten (c) und (d) auch ein mit einem Silan der Formel I vorbehandeltes Quarzmehl eingesetzt werden kann. Solche mit Epoxysilan, Alkylsilan oder Vinylsilan vorbehandelten Quarzmehle sind z.B. unter den Bezeichnungen Silbond® W12 EST, Vp W12 VST und Vp W12 SST im Handel erhältlich.

Die Mengen der Komponenten (a) - (d) können in den erfindungsgemässen Zusammensetzungen in weiten Bereichen variieren.

Vorzugsweise enthalten die erfindungsgemässen Zusammensetzungen 15-75 Gew.-% der Komponente (a), 0,001-10,0 Gew.-% der Komponente (b), 20-80 Gew.-% der Komponente (c) und 0,01-20,0 Gew.-% der Komponente (d), wobei die Summe der Komponenten (a), (b), (c) und (d) 100 Gew.-% beträgt.

Besonders bevorzugt sind erfindungsgemässe Zusammensetzungen enthaltend 25-65 Gew.-%, insbesondere 30-50 Gew.-%, der Komponente (a), 0,01-2,0 Gew.-%, insbesondere 0,1-1,0 Gew.-%, der Komponente (b), 30-75 Gew.-%, insbesondere 50-70 Gew.-%, der Komponente (c) und 0,05-10,0 Gew.-%, insbesondere 0,1-2,0 Gew.-%, der Komponente (d).

Die Herstellung der erfindungsgemässen Stoffgemische kann in üblicher Weise durch Vermischen der Komponenten mit Hilfe bekannter Mischaggregate (z.B. Rührer, Walzen) erfolgen.

Neben den Komponenten (a) - (d) kann die erfindungsgemässe Zusammensetzung weitere übliche Zusatzstoffe enthalten, wie z.B. Antioxidantien, Lichtschutzmittel, Weichmacher, Farbstoffe, Pigmente, Thixotropiemittel, Zähigkeitsverbesserer, Entschäumer, Antistatika, Gleitmittel und Entformungshilfsmittel.

Die erfindungsgemässe Zusammensetzung kann direkt vor der Polymerisation hergestellt oder als vorformuliertes Gemisch verwendet werden. Das Gemisch kann vor der Polymerisation als gebrauchsfertige Formulierung längere Zeit gelagert werden, was für die grosstechnische Anwendung von Vorteil ist. Es empfiehlt sich jedoch eine Lagerung unter Lichtausschluss, wenn der Katalysator photolabile Liganden enthält.

Einen weiteren Erfindungsgegenstand bildet ein Verfahren zum Verkleben von zwei oder mehreren Substraten, dadurch gekennzeichnet, dass eine härtbare Zusammensetzung enthaltend die oben angegebenen Komponenten (a) - (d) auf mindestens eins der zu verklebenden Substrate aufgebracht wird, die zu verklebenden Substrate in Kontakt gebracht werden und die Zusammensetzung durch Erwärmen auf eine Temperatur > 40 °C gehärtet wird.

Zweckmässig wird das erfindungsgemässe Verfahren bei einer Temperatur von mindestens 60°C durchgeführt. Insbesondere wird das erfindungsgemäße Verfahren bei Temperaturen von 60 bis 300 °C, bevorzugt 60 bis 250 °C, besonders bevorzugt 60 bis bis 200 °C und insbesondere bevorzugt 70 bis 160 °C, durchgeführt. Nach der Polymerisation kann es vorteilhaft sein, das Gemisch bei erhöhten Temperaturen, zum Beispiel 80 bis 200 °C, nachzutempern.

Die Applikation des Klebstoffgemisches auf das Substrat erfolgt auf bekannte Weise. Die Schichtdicke der Klebefilme beträgt dabei im allgemeinen nicht mehr als 500 µm, vorzugsweise 40-120 µm. Es können aber auch wesentlich dickere Schichten thermisch ausgehärtet werden.
Vor der Beschichtung mit dem Klebstoffgemisch können die zu verklebenden Oberflächen, falls zweckmässig, entfettet und aufgerauht werden.
Nach dem Zusammenfügen der beschichteten Oberflächen werden diese gegebenenfalls zusammengepresst oder verklammert.

Als zu verklebende Oberflächen eignen sich vor allem solche aus Metallen, wie Eisen, Stahl, insbesondere Aluminium und seinen Legierungen, z.B. mit Magnesium oder Silicium. Der Klebstoff kann auch für die Verklebung zweier verschiedenartiger Materialien verwendet werden, zum Beispiel zur Verlebung von Metallen mit polymeren Materialien.

Die nach dem erfindungsgemässen Verfahren hergestellten Verlebungen zeichnen sich vor allem durch eine hohe Haftfestigkeit sowie eine minimale Wasserabsorption aus.

### Beispiel 1:

0,39 g Norsorex NS (thermoplastisches Polynorbornen der Fa. Nippon Zeon) wird bei 80 °C in 38,91 g Dicyclopentadien gelöst. Nach Abkühlen auf 60 °C werden 0,5 g Vinyltrimethoxysilan (Silquest® A-171 der Fa. Osi Specialties) und 0,2 g (Cyclohexyl)₃P(p-Cymol)RuCl₂ hinzugegeben, und das Gemisch wird 20 min bei 60 °C gerührt. Nach der portionsweisen Zugabe von 60 g Wollastonit FW 200 (Fa. Partek Minerals) wird weitere 15 min gerührt. Anschliessend wird das Gemisch im Vakuum (3 mbar) 3-5 min entgast.
Die so hergestellte Mischung wird in eine 4 mm dicke Plattenform aus Aluminium gegossen und anschliessend ausgehärtet (2 h/80 °C, 4 h/100 °C, 1 h/150 °C). Dabei wird festgestellt, dass der gehärtete Formkörper eine sehr gute Haftung auf Aluminium aufweist und sich sowohl bei -180 °C als auch bei 200 °C nicht entformen lässt.

## Patentansprüche

1. Verwendung einer Zusammensetzung enthaltend
(a) mindestens ein gespanntes Cycloolefin,
(b) einen Katalysator für die ringöffnende Metathese-Polymerisation,
(c) einen Füllstoff und
(d) ein Silan der Formel I 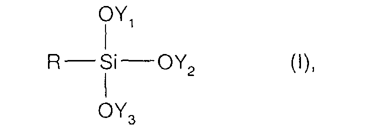 worin R für eine einwertige organische Gruppe mit 2 bis 100 C-Atomen steht, wobei ein oder mehrere -Atome durch O-, S-, N- oder Si-Atome ersetzt sein können und Y₁, Y₂ und Y₃ unabhängig voneinander C₁-C₂₀-Alkyl, C₅-C₂₀-Aryl, C₆-C₂₀-Aralkyl, C₅-C₁₂-Cycloalkyl, C₂-C₂₀-Alkoxyalkyl oder C₁-C₂₀-Acyl bedeuten, als Klebstoff.

2. Verwendung einer Zusammensetzung gemäss Anspruch 1 als Klebstoff für Metalle.

3. Verwendung einer Zusammensetzung gemäss Anspruch 1 als Klebstoff für Aluminium.

4. Verwendung einer Zusammensetzung gemäss Anspruch 1 enthaltend Dicyclopentadien als Komponente (a).

5. Verwendung einer Zusammensetzung gemäss Anspruch 1 enthaltend (Cyclohexyl)₃P(p-Cymol)RuCl₂ als Komponente (b).

6. Verwendung einer Zusammensetzung gemäss Anspruch 1 enthaltend als Komponente (c) Al₂O₃, Al(OH)₃, CaCO₃, CaSiO₃, SiO₂, Glasfaser-, Kohlefaser- oder Aramidfasergewebe.

7. Verwendung einer Zusammensetzung gemäss Anspruch 1 enthaltend als Komponente (c) Al₂O₃, Al(OH)₃, Wollastonit, Quarzmehl, Dolomit, Kalk, Kreide, Glasfaser-, Kohlefaser- oder Aramidfasergewebe.

8. Verwendung einer Zusammensetzung gemäss Anspruch 1 enthaltend Vinyltrimethoxysilan als Komponente (d).

9. Verfahren zum Verkleben von zwei oder mehreren Substraten, dadurch gekennzeichnet, dass eine härtbare Zusammensetzung enthaltend die Komponenten (a) - (d) gemäss Anspruch 1 auf mindestens eins der zu verklebenden Substrate aufgebracht wird, die zu verklebenden Substrate in Kontakt gebracht werden und die Zusammensetzung durch Erwärmen auf eine Temperatur > 40 °C gehärtet wird.
